# EUROPEAN PATENT SPECIFICATION

(11) **EP 0 325 366 B1**
(45) Date of publication and mention of the grant of the patent: **24.05.1995**
(21) Application number: 89300243.6
(22) Date of filing: 12.01.1989
(51) Int. Cl.: H04B 10/12

(54) **Multi-channel optical communication system**
Optisches Kommunikationssystem mehrerer Kanäle
Système de communication optique à canaux multiples

(30) Priority: 19.01.1988 US 145174
(43) Date of publication of application: 26.07.1989
(73) Proprietor: Hewlett-Packard Company, Palo Alto, California 94304 (US)
(72) Inventor: Vincent, Kent D., Cupertino California 95014 (US); Neumann, Hans D., Los Altos California 94022 (US)
(74) Representative: Colgan, Stephen James

(56) References cited:
- EP-A- 0 158 967
- EP-A- 0 240 000
- EP-A- 0 245 566
- WO-A-82/02956
- US-A- 3 760 174

## Description

### Background of the Invention

### A. Field of Invention

The present invention pertains generally to optics and more specifically to a multi-channel fibre optic communication system which utilizes color separators and color combiners.

### B. Description Of The Background

Color imagers include color video cameras and color scanners for commercial printing. Color imagers transform color pictures into machine readable data. This is accomplished by dividing a color image into many small portions called pixels. The color imager separates light from each pixel into red, blue or green light. Numbers assigned to each pixel of the color image represent the red, blue, and green light. A fast, high resolution, accurate color imager would enhance the usefulness of computers and automate numerous tasks. For example, computers can print and display color images. However, the lack of fast, accurate, and high-resolution means for transferring color images into a computer limits the use of this capability. In the early prior art, discrete optical components, such as beamsplitters and color filters, separate the color components of an image. Dichroic beamsplitters have been widely used due to the combined functions of these devices as both beamsplitters and filters. Dichroic beamsplitters employ selected multilayer dielectric interference optical filter coatings, hereinafter referred to as dichroic coatings. Typically, color separation is achieved by placing two discrete dichroic beamsplitters in the optical pathway between the projection lens of the imager and its photosensors. The first dichroic beamsplitter reflects a first spectral band (e.g., green) to the first photosensor while transmitting the remaining spectral bands to the second dichroic beamsplitter. The second dichroic beamsplitter reflects a second band (e.g., red) to a second photosensor while transmitting the remaining spectral band (e.g., blue) to the third photosensor. The disadvantage of this approach is that the respective dichroic beamsplitters and photosensors must be precisely aligned; otherwise, the color components will not have the proper optical coincidence. The costly alignment process limits the use of this prior art color separator. Dichroic beamsplitters (dichroic prism), as well as other prior art techniques of color scanning are described more fully in a Japanese article entitled "Image Scanners," OEP November 1986, pp. 18-22. As disclosed therein, the dichroic prism requires each sensor to be placed on a different plane.

With the advent of low-cost, solid-state photodiode array photosensors, various attempts have been made to develop low cost color separation techniques for color scanners and video cameras.

Solid-state, photodiode arrays with integral color filters have been commercialized by Hitachi, Toshiba, Sony and RCA. These devices employ a two-dimensional array of photodiodes on a single silicon substrate. The array is coated with a gelatin layer, into which color dyes are selectively impregnated, using standard masking techniques. Each photodiode is, thus, given an integral color filter, e.g., red, green or blue, according to a color pattern which is repeated throughout the array. The same technology has been applied to one-dimensional photodiode array sensors for line scanners. The latter devices have been commercialized by Toshiba and Fairchild.

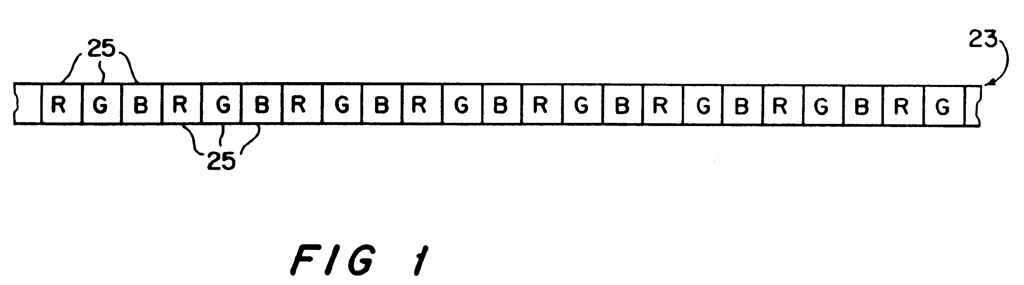

A prior art color imager using photodiode arrays is shown in Figure 1. The single linear photodiode array 23 has individual organic dye filters impregnated over each photodiode in a repetitive red, blue and green pattern. Color separation, the breaking down of a color image into red, blue and green light, is achieved by focusing the light beam on the array, as shown in Figure 1. One red, green and blue photodiode grouping 25 provides information to one color pixel. This prior art technique has several disadvantages. Since three photodiodes supply information to one pixel, the pixel resolution is reduced to one-third. For accurate color imaging, the luminance detail and chroma of a given color pixel from the original image must be resolved by three optically coincidental photosensor elements. However, the prior art photodiode arrays do not have color-coincidence. The red light is detected from one location, green from another, and blue from a third location. In addition, two-thirds of the light incident on each photodiode is lost by filter absorption (e.g., a red filter absorbs green and blue spectral bands). In order to increase the resolution, the array 23 must be lengthened or the photodiode area must be decreased. However, either of these approaches to increase the resolution will proportionately decrease scan speed. Also, the dye filters have less color band purity than dichroic filters. The prior art approach desaturates color sensitivity and is otherwise spectrally inaccurate.

Another prior art color imager using photodiode arrays has a rotating color wheel composed of colored filter segments. The lens focuses a line image of the original object on a linear photodiode array. The rotating color wheel filters the projected line image in a repeating color sequence, e.g., red, green, blue. The signal for each color component of a given line image is stored digitally until all three color components have been detected. The signals are then reordered in memory to assign three color values to each pixel in the line image.

The color wheel color separation technique has the advantages of utilizing the full resolution of the photodiode array as well as utilizing dichroic filters. However, it has several disadvantages. The scan speed is one-third of the integral sensor/filter scan speed, since only one of three colors is detected at a time. Also, further speed reduction results from transitions between filter segments during rotation of the wheel. When the color wheel and scan line are continuously driven, as opposed to synchronously "stepped", the effective resolution of the photodiode array is diminished in the scan direction by the movement of the scan line through the color cycle of the color wheel. Another disadvantage is the size of the color wheel which limits device extensibility. Page-width "contact" or "traversing head" type scanner embodiments become impossible or unwieldy. Further, this prior art device is burdened with a large moving mechanism and the control of this mechanism.

The Sharp Corporation of Japan has introduced a third prior art color separation technique for color document scanning. The Sharp scanner employs a single photodiode array with three sequentially-fired colored fluorescent lamps (e.g., red, green, blue), as the imaging light source. The sequence of signals obtained by the photodiode array is directly analogous to the color wheel color separator. That is, the input to the photodiode array is a sequential input of the red, green and blue components of a given original line image. Likewise, the photodiode signals for each color component are digitally stored and reordered in memory at the end of each color cycle.

Like the color wheel color separator, the tri-colored lamp approach provides imaging means that utilize the full resolution of the photodiode array. Several shortcomings, however, limit the speed and color integrity of the imager. In order to obtain correct color separation, the light output from each lamp should be extinguised before the firing of the next lamp in sequence; blended lamp output produces undersaturated color detection. Scanning speed, as a result, is limited by the persistence time of the phosphors utilized in each fluorescent lamp or the ability to dynamically subtract out the signal produced by the decaying light output of a previously fired lamp. Color integrity is further limited by the selection of phosphors having persistence values sufficiently low to meet commercial scan speed specifications. Typically, external absorption filtering of the lamps is required to obtain the desired spectral characteristics or each lamp output. As with the color wheel color separator, when the scan line is continuously driven, as is desirable for scan speed, the effective resolution of the photodiode array is diminished in the scan direction by the movement of the can line through the color cycle of the sequentially-fired lamps. The size and bulk of the optical system comprising the three lamps likewise restricts device extensibility toward "contact" or "traversing head" type scanner applications.

Color combiner devices suffer from many of the same disadvantages and limitations as the color separators set forth above. A color combiner, as defined herein, comprises an optical device for taking individual color components and spatially and spectrally combining each of the individual beams into a single optical beam wherein each of the individual color component beams have coincident optical axes. The prior art does not disclose any device that is capable of combining individual spectral beams, as described, in a simple and easy manner.

### Summary of the Invention

This present patent application relates to work developed out of our earlier European Patent Application 87104776.7 (EP-A-0240000), and the reader is referred to this earlier application for background information. It relates to colour separators employed with linear array photosensors.

IEE Reprint series 3, 1980, Peter Peregrinus Ltd., Stevenage GB, "progress in optical communication", page 201, 4.1.5, S. Sugimoto et al : "High-speed digital signal transmission experiments by optical-wavelength-division multiplexing" discloses an optical fiber transmission system comprising transmitters, an optical multiplexer, an optical-fiber line, an optical demultiplexer and receivers. The transmitters are double epitaxial silicon avalanche photodiodes of a double abrupt junction planar type. The multiplexer is a small-size, double-lens type. The demultiplexer is a prism type including an input objective lens to culminate the input beam, a CD S prism of an angle of 45 degrees to separate the culminated beam and angle, according to the wavelength, an output lens to converge the CD S output beams and output fibers to guide them to the receiver. This article does not disclose the use of parallel dichroic layers for separating a combined optical beam into spectrally and spatially separated component beams nor does it disclose the use of parallel dichroic layers to combine spectrally separated component beams into a single combined beam.

The present invention comprises a multiple channel fiber optic communication device as specified in claim 1 hereinafter that is capable of transmitting multiple channels on a single fiber optic by using a plurality of optical beams having different spectral ranges that are combined for transmission through the fiber optic and are separated after transmission through the fiber optic.

An advantage of the present invention is that the spectral separator and combiner optical components are compact, inexpensive and easy to manufacture. Another advantage of the present invention is that the optical components produce color coincidence within a pixel. That is, each portion of a pixel generates all three color components so as to provide exact color convergence and line acuity. The invention also provides accurate spectral and spatial separation as well as accurate spectral and spatial combination.

The optical combiner and optical separator components used in the present invention are also extremely efficient in comparison to conventional filtration techniques since dichroic reflective layers are used. Essentially all of the incident light striking the components is transmitted with very little absorption. A conventional filter typically absorbs two spectral bands to transmit one. Since essentially all of the visible light is utilized, maximum speed is achievable for a given optical system.

Additionally, the optical components of the present invention do not require costly optical alignment. The dichroic coatings are precisely separated by glass plates and/or precise separator devices in the manufacturing process. This separation is determined by considering the refractive indices of the substances used in the optical separator and combiner components as well as the angles of incidence to provide a very precise alignment. The optical separator and combiner components provide equal optical path lengths for each of the individual beams with minimal alignment problems.

Also, since the present invention uses substantially parallel, spatially separated, spectral beams for both the combiner and separator optical components, a single object and image plane are employed in accordance with the present invention.

### Brief Description of the Drawings

Figure 1 is a prior art color sensor.

Figure 2 is a schematic cut-away view of the trichromatic beamsplitter mounted with focusing optics and a three line CCD photodiode array.

Figure 3 is a schematic diagram illustrating one embodiment of the optical component that can function either as a color separator or a color combiner.

Figure 4 illustrates another embodiment of the optical component that can comprise either an optical separator or an optical combiner.

Figure 5 shows another embodiment of the optical component that can comprise either an optical separator or optical combiner.

Figure 6 illustrates the manner in which the plate separation and angle of incidence can be varied in the optical component that can comprise either the color separator or color combiner.

Figure 7 is a schematic side view of a color printer.

Figure 8 is a schematic plan view of a three line liquid crystal display (LCD) shutter device.

Figure 9 is a schematic side view of a color projection device.

Figure 10 is a schematic plan view illustrating three matrices of a liquid crystal display (LCD) shutter. Alternatively, Figure 10 can schematically represent three matrices of light emitting diodes.

Figure 11 is a schematic isometric view of both a color imaging and a color projection device.

Figure 12 is a schematic side view of a color imaging device.

Figure 13 is a schematic plan view illustrating three matrices of photo detectors.

Figure 14 is a schematic side view of an electronic color filter device.

Figure 15 is a schematic side view of a multiple channel fiber optic communication device according to the invention.

Figure 16 is a schematic representation of the use of three color lasers as an optical source.

Figure 17 is a schematic side view of another embodiment of the multiple channel fiber optic communication device.

### Detailed Description of the Invention

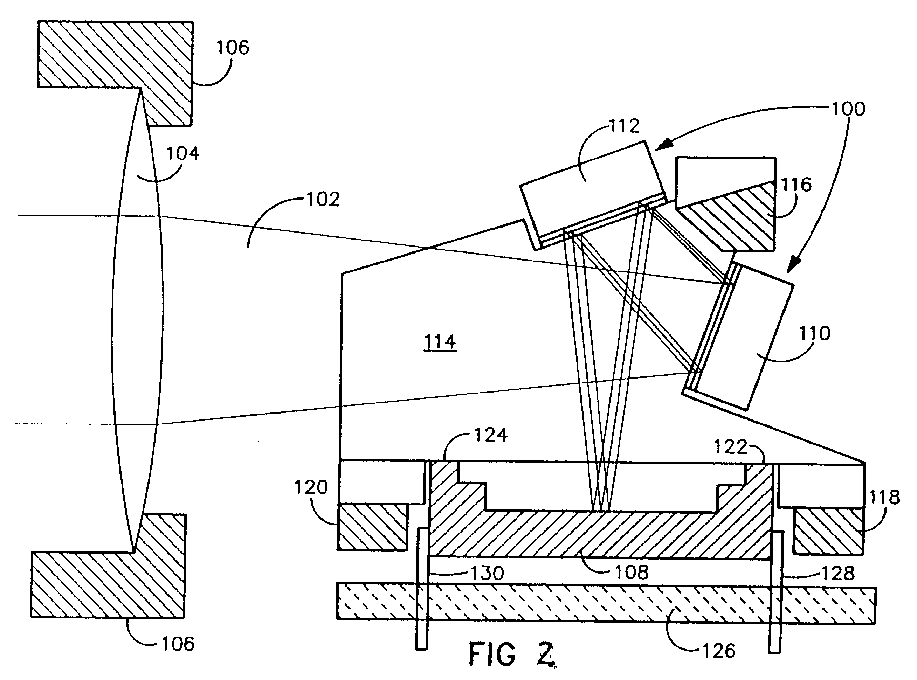

Figure 2 is a schematic diagram showing a cut away view of the optical component 100 employed as a trichromatic beamsplitter device. As shown in Figure 18, an input beam 102 is focused by a lens 104 which is held by a lens holder 106 capable of focusing the lens very precisely on the detector surface of the three line CCD array 108. Input beam 102 impinges upon the optical surfaces of the optical separator 100 and is separated into three predetermined colors to form three optical beams having predetermined spectral ranges that are carefully selected by the dichroic layers placed on the optical surfaces of the optical separator 100. As shown on Figure 2, the first dichroic layer device 110 is disposed such that the angle of incidence of the optical axes of input beam 102 is approximately 22.5 degrees. Input beam 102 is then split into three spatially and spectrally separated beams that are transmitted to a second dichroic layer device 112 which is also disposed at approximately 22.5 degrees to the optical axes of each of the spatially and spectrally separated optical beams. The second dichroic layer device 112 is normally constructed in the same manner as the first dichroic layer device 110 so that the three separate optical beams that are transmitted from the second dichroic layer device have equal optical path lengths to a predetermined image plane. As shown in Figure 2, the detector device 108 is disposed on the image plane that is substantially normal to the optical axis of input beam 102. Each of the three spatially and spectrally separated optical beams is focused on a separate line detector array on detector 108 so that a line scan of, for example, a document, results in each of the colors from the line scan being detected simultaneously on the detector surface of detector 108 as a result of the equal optical path lengths of each of the individual spectrally separated beams. The dichroic layer devices 110 and 112 are precisely held in the Positions illustrated by a mounting device 114 that includes arm support structures 116, 118 and 120 that extend between two side portions. The support structure 114 is open in the central portions to allow light to be transmitted to the optical component 100 and subsequently to detector 108. Detector 108 is also precisely located in the mounting device 114 by way of interface surfaces 122 and 124. Signals derived from detector 108 are fed directly to circuit board 126 via connectors 128 and 130 that comprise a plurality of connectors.

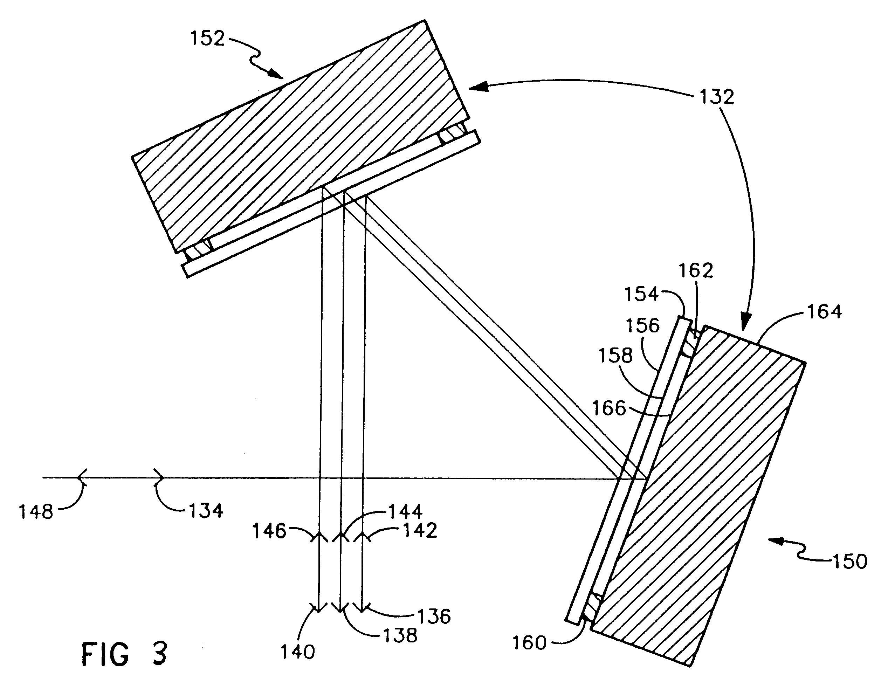

Figure 3 illustrates an alternative manner in which the optical component can be constructed and utilized. As shown in Figure 3, the optical component 132 can be used to separate an input beam 134 into three separate spatially and spectrally separated beams 136, 138 and 140. Alternatively, the optical component 132 can be used to combine three spatially and spectrally separated input beams 142, 144, and 146, into a single combined output beam 148 that spectrally and spatially combines each of the input beams such that each optical axes of the input beams 142, 144 and 146, are coincident as shown by output beam 148. Of course, all of the optical devices illustrated and described herein can be used in this manner as an optical combiner as long as the optical axes of each of the spatially and spectrally beams is aligned properly with the optical component, such as optical component 132.

Figure 3 also illustrates the manner in which each of the dichroic layer devices 150 and 152 can be constructed. As illustrated in Figure 3, dichroic layer devices 150 comprises a substantially transparent optical support medium 154 that is coated on both sides with dichroic layers 156 and 158. The substantially transparent optical support medium 154 is supported by spacers 160 and 162, that are attached to a substrate device 164 having either a totally reflective surface 166, or a surface coated with another dichroic layer to provide a specified spectral range to be reflected from surface 166. The space between the surface 166 and the dichroic layer 158 can comprise an air gap or can be filled with an optically transparent medium or can be evacuated, depending upon the application of the optical component 132. As shown in Figure 3, the optically transparent support medium 154 can comprise a glass plate that has a higher refractive index in the surrounding air, causing the individual optical beams to be refracted at different angles. Since the optical surfaces are reversed in dichroic layer device 152, the optical path lengths are adjusted so that they are equal in length to a plane that is substantially normal to the optical axes of each of the individual beams. Of course, the same is true whether the optical component 132 is being used as a color separator or color combiner. The difference in the refractive index of the glass plate versus the air gap does not cause a change in optical path lengths due to the fact that the surfaces from which the beams are reflected is reversed on the subsequent dichroic layer device as long as the glass plate has an air equivalent path length of the air gap.

As illustrated in both Figures 2 and 3, the angle of incidence is approximately 22.5 degrees for each of the dichroic layer devices. The low angle of incidence and the very small plate size that is used in many applications results in minimal astigmatism so that more expensive optical prisms can be eliminated without noticeable degradation of optical quality.

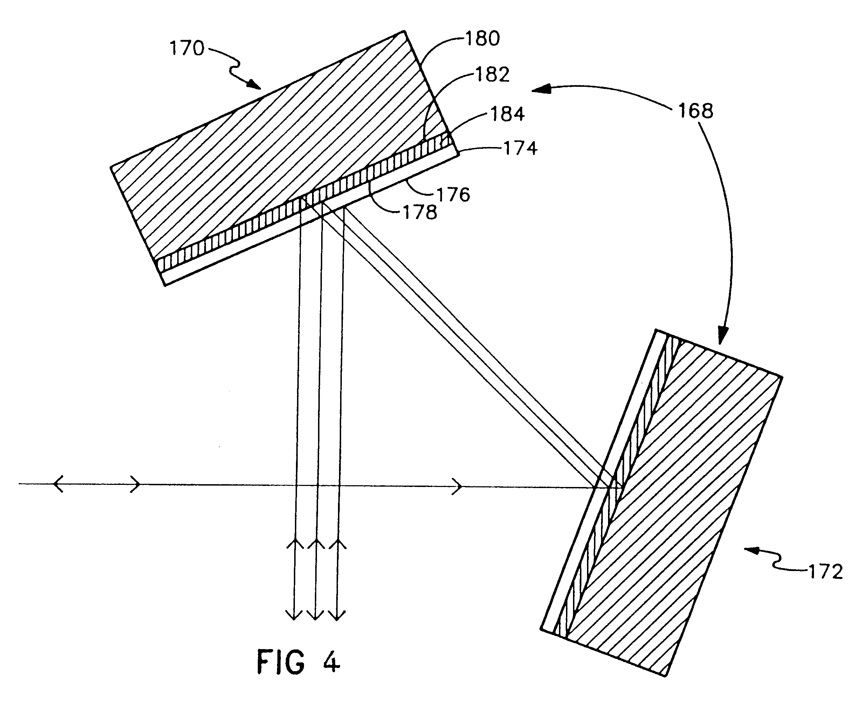

Figure 4 illustrates an optical component 168 that can be constructed in an alternative manner. Optical component 168 can comprise first and second dichroic layer devices 170 and 172, that can be used for either spectrally and spatially combining or separating optical beams. As shown, dichroic layer device 170 has a substantially transparent optical support medium 174 that has dichroic layers 176 and 178 disposed on two substantially flat sides. The substantially optically transparent support medium 174 is attached to a substrate 180 having either a totally reflective surface 182, or a surface coated with another dichroic layer to provide a specified spectral range to be reflected from surface 166 by way of an optical glue 184 that is capable of transmitting substantially all optical radiation. The optical glue, such as previously disclosed above, can have an index of refraction that closely matches the optically transparent support medium 174 to prevent a change in the angle of refraction within the dichroic layer device 170. As mentioned previously, the optical transparent support medium 174, for many applications, must be very thin to produce the desired spacing between the beams. Coating of the dichroic layers 176 and 178 on the glass plates 174 may result in a bending or warpage of the optical transparent support medium 174. However, substrate 180 has sufficient thickness to prevent warpage and has a substantially flat reflective surface 182 to which the optical transparent support medium 174 can be attached by way of the optically transparent glue 184. Proper attachment of the optical transparent support medium 174 to the substantially flat reflective surface 182 can provide sufficient support to maintain a substantially flat surface on optical transparent support medium 174. Of course, the thinner the glue layer is between optical transparent support medium 174 and the substantially flat reflective surface 182, the stiffer the glue line becomes which, in turn, further restricts relative movement. To provide even additional support, a glass plate with a thin layer of adhesive on both sides can be used in place of the optical glue 184. Again, dichroic layer device 172 would typically be constructed in the same manner as dichroic layer device 170 to simplify the overall optical component 168.

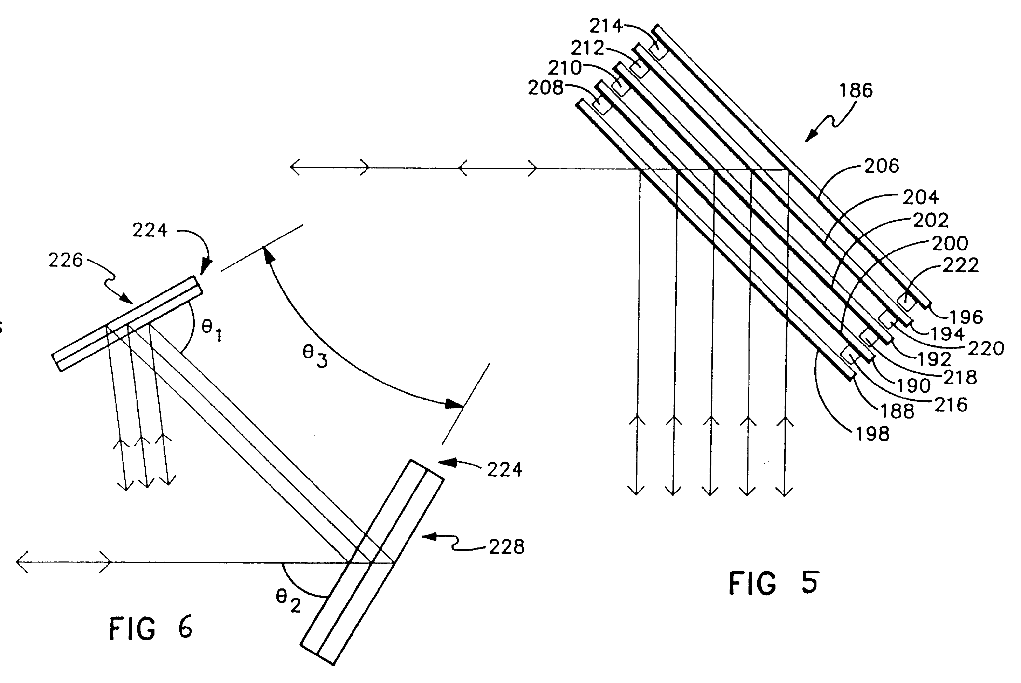

Figure 5 illustrates an alternative manner of constructing a dichroic layer device 186. Again, Figure 5 illustrates that the dichroic layer device 186 can be used either as a beam splitter or a beam combiner. Additionally, only one composite dichroic component 186 is illustrated, although additional composite dichroic component devices can certainly be utilized to equalize optical path lengths and direct the optical beams to different locations.

Figure 5 also illustrates that a plurality of optical transparent support media 188, 190, 192, 194, and 196, can be used to either separate or combine a plurality of beams. Of course, any number of beams can be combined or separated using the techniques of the present invention. As shown in Figure 5, each of the optically transparent support medium 188, 190, 192, 194, and 196, have dichroic layers 198, 200, 202, 204, and 206, disposed on its front layer. Spacers 208, 210, 212, 214, 216, 218, 220 and 222, support and separate each of the optically transparent support media 188, 190, 192, 194, and 196. Where large separation of the individual spectral beams occurs or is desired, the dichroic layer device 186 illustrated in Figure 5 is ideally suited. The spacing provided by spacers 208, 210, 212, 214, 216, 218, 220 and 222, can be varied to account for the increased thickness such as the increased glass thickness of each of the optical transparent support media 188, 190, 192, 194, and 196, as the beam is transmitted through the dichroic layer device 186 to insure proper alignment of each of the individual spectral beams. Of course, optical glues, angles of incidence, plate thicknesses, use of prisms and other techniques, such as described herein, can be used in any of the devices shown, to reduce the effects of astigmatism and prevent other possible problems. Of course, it should be understood that any manner of supporting and separating substantially parallel dichroic planes can be used in addition to the glass plates, glue layers, spacers, etc., disclosed herein. The method of support and separation of a plurality of dichroic planes is secondary to the primary invention disclosed herein which comprises the use of a plurality of dichroic planes disposed at an angle to the optical beams for either spatially and spectrally combining or separating the beams. Additionally, the last optical transparent support medium 196 can be replaced with a totally reflective surface as described above.

Figure 6 illustrates other implementations of the optical component 224. As illustrated in Figure 6, the spacing of the dichroic layer devices 226 and 228 can be changed as well as the angles of impingement, Theta One and Theta Two of the optical beams with the dichroic layers devices 226 and 228, respectively. Additionally, the total included angle theta three can also be varied to direct the optical beams to a predetermined plane. It is possible to maintain equal optical path lengths as well as vary the spacing between the optical axes of each of the individual spectral beams by varying both the angle of impingement and the plate thicknesses. As mentioned previously, the materials utilized in the dichroic layers devices 226, 228 can also be different to change the index of refraction as well as the path length of the optical beams within the dichroic layer devices to provide an additional manner of adjusting the optical component 224 of the present invention. For the purposes of simplicity, Figure 6, as well as other drawings disclosed herein, have been drawn without the angles of refraction illustrated.

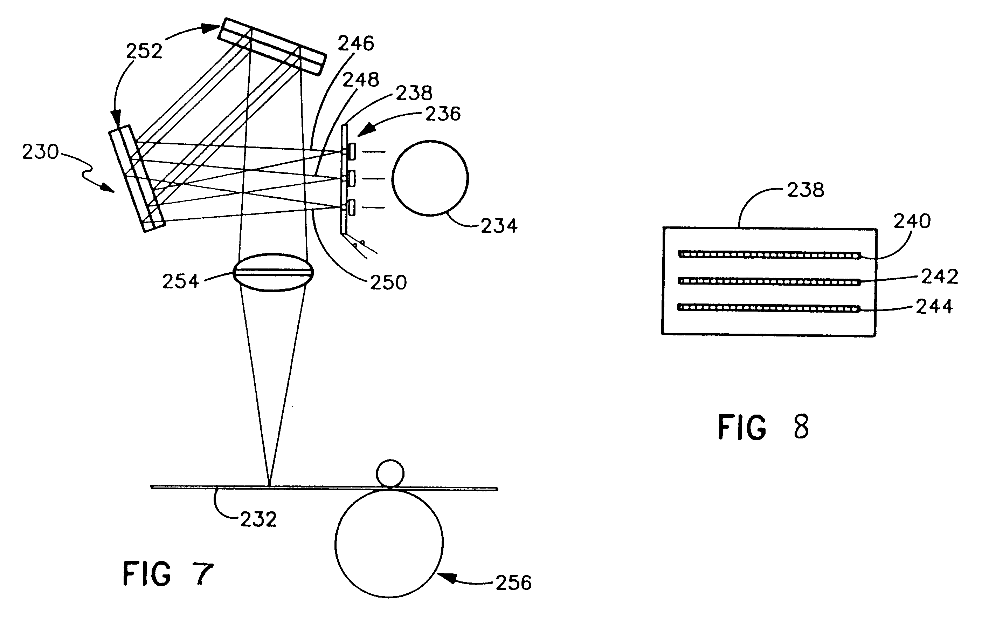

Figure 7 is a schematic side view of a color imaging device 230 that generates a color image on a recording medium 232 located on an image plane. As illustrated in Figure 7, an illumination source 234 provides a source of white light which is filtered by filters 236 to provide three separate color beams that have predetermined spectral ranges and function as three separate sources of illumination. The color filters 236 are located adjacent to a liquid crystal display (LCD) device 238 that is further illustrated in Figure 8.

Referring to Figure 8, the liquid crystal display device 238 has three linear arrays 240, 242, 244 of liquid crystal display shutters that are capable of transmitting light on a continuously variable gray scale from essentially a total throughput level to approximately opaque in response to an electrical control signal. A resolution of approximately 1000 elements per inch can be obtained in LCD arrays, such as illustrated in Figure 8. As a means of comparison, fine grain film may typically have a range of resolution of 600 to 800 line pairs per inch. Hence, a very high resolution can be obtained using LCD shutters. LCD shutters are available through several manufacturers including Epson Corporation and Sharp Corporation in Japan.

Referring again to Figure 7, the three optical beams 246, 248, and 250, that are transmitted from LCD shutter 238 have been adjusted in intensity to represent the color intensity of a single line of information to be recorded on recording medium 232 in accordance with the image information provided by the control signal. Optical beams 246, 248, and 250, are directed through optical component 252, which can comprise any of the optical components disclosed herein, and are focused by lens 254 onto the recording media 232. As illustrated, the three separate lines of information provided by each of the line matrices 240, 242 and 244 (Figure 8), is combined into a single beam having coincident optical axes such that each pixel element comprises a combination of the three primary colors from each of the optical beams 246, 248 and 250. This results in very high convergence and line acuity that is not possible using other techniques. For example, one method that has been contemplated for recording documents in this manner utilizes a CRT color monitor that is focused on a recording document with each of the colors sequentially exposed on the recording media. Not only does this technique require three separate exposures of the recording media, which is expensive and time consuming, line acuity and convergence are extremely low because of the triad of colors that are required in CRT color monitors.

The recording media 232 of Figure 7 can comprise a wide range of recording media. For example, the present invention could be used for presentation graphics by using a special color exposure paper available from Mead Company. The Mead paper is coated such that, when it is exposed to light, it changes chemically. The paper is then run through a roller which crushes the chemically altered coating to produce a color print. Additionally, recording medium 232 can comprise photographic film or any other recording medium capable of recording optical radiation, including non-visible radiation. Rollers 256 function to advance the recording medium 232 and can be driven continuously or in a step fashion using a stepping motor to correspond to the manner in which the control signal is applied to LCD shutter device 238. Alternatively, LCD shutter device 238 can comprise three arrays of light emitting diodes (LEDs) that produce three different spectra of light in response to a control signal. In that case, the illumination source 234 and filters 236 can be eliminated.

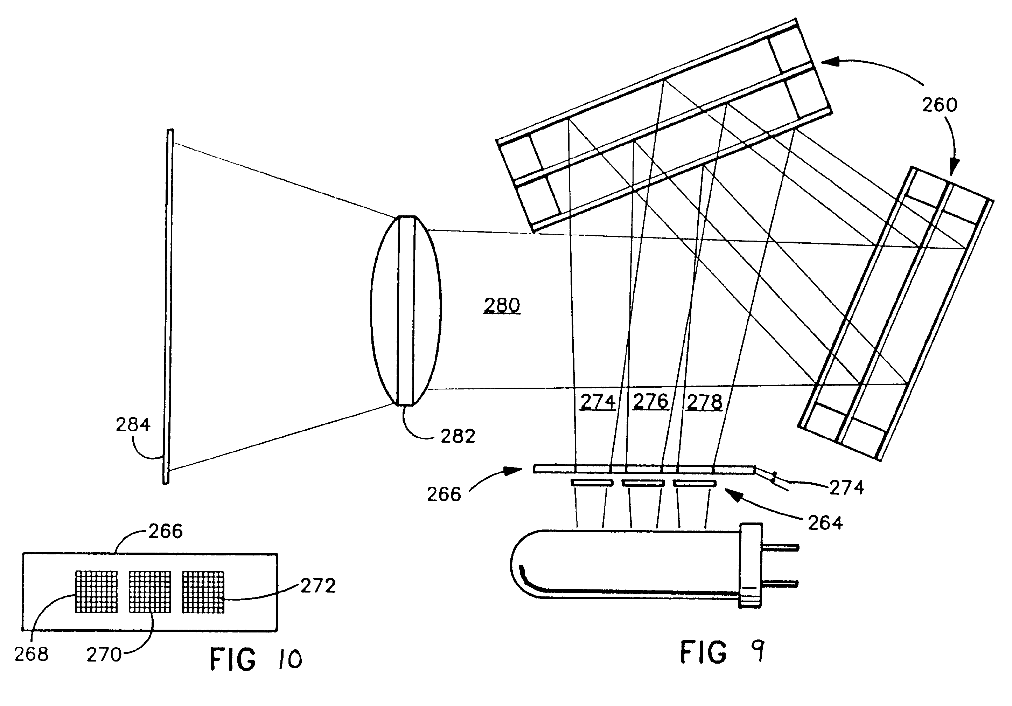

Figure 9 is a schematic side view of a projection device using the optical component 260. As illustrated in Figure 9, the optical component 260 is constructed in a manner similar to optical component 186 illustrated in Figure 5 but can comprise any of the implementations of the optical component. As mentioned previously, the spacing between the glass plates can be adjusted for the refraction produced in the glass plates. For example, if the angle of incidence is 22.5 degrees, as schematically illustrated in Figure 25, the angle of the beam within the glass plate changes to approximately 14.61 degrees for glass. To account for added glass thickness, each of the spacers must provide additional space for subsequently deeper layers in the optical component 260. Of course, the advantage of the spaced plate optical component 260, illustrated in Figure 9, and optical component 186, illustrated in Figure 1, is that as long as the glass plates are thick enough to provide an optically flat surface without warpage, the spacers provide automatic alignment of the glass plates to an accuracy of approximately two microns.

Figure 9 illustrates a two-dimensional projection device in which an optical source 262 produces white light that is filtered by color filters 264 which each project a different spectral range of frequencies. Each of these filters 264 has a two dimensional surface that overlays the LCD matrixes 266. LCD matrixes 266 are also illustrated in Figure 10. LCD matrixes 266 comprise three individual matrix arrays 268, 270 and 272, which are individually controlled by a control signal schematically illustrated by contacts 274, to provide an image for each separate color of the three primary colors. Of course, any number of matrixes can be used to provide any number of colors desired, although, only the three primary colors are necessary to provide a full color display. Each LCD mattix display is capable of transmitting a pre-determined amount of radiation of each spectral band at each spatial location of each individual matrix element in a continuously variable fashion that is controlled by the image control signal 274. The LCD matrices act as light shutters and are deposited using photolithography deposition precision that allows for very high resolution images. Additionally, they can be deposited on a monolithic substrate which allows the matrices to be aligned with the optical beams very easily, provides a very uniform electrical responsivity across each matrix, as well as between different colors (different matrices), and is easy and inexpensive to manufacture. The three two-dimensional beams are precisely combined in the optical component 260 so that each of the optical beams 274, 276 and 278, has an equal optical path length. The single spectrally and spatially combined beam 280 is then focused by lens 282 on a projection screen 284 which can be designed for viewing either from the front or back sides. Lens 282 is schematic in nature and most likely will comprise at least a two element lens for projection onto screen 284.

An advantage of the projection device illustrated in Figure 9 is that each pixel element is a super-imposition of each of the three colors. In other words, each pixel is a color composite of all three colors. This differs significantly from typical color CRT screens wherein each pixel is a separate color that the eye optically integrates into a single combined color pixel. A much sharper image is produced since there is a convergence of all three colors in each pixel element. Furthermore, typical color CRT screens require a shadow mask to separate each individual color pixel. Since the present invention has complete color convergence of each pixel, shadow masks are not necessary and much greater picture clarity can be obtained. Most importantly, the projection device of the present invention does not produce the harmful X-rays that are produced by CRTs.

Alternatively, the device of Figure 9 can be used as a projection device for projecting an image on a recording medium. In other words, projection screen 284 can comprise a recording medium rather than a projection screen so that images can be recorded in both dimensions simultaneously rather than in a single dimension in a serial fashion such as is illustrated in Figure 7. Moreover, the LCD matrix 266 can be replaced by a series of light emitting diode matrixes such that the filters 264 and illumination source 262 can be eliminated. In this case, each LED matrix 268, 270 and 272, would produce a different spectral range of frequencies.

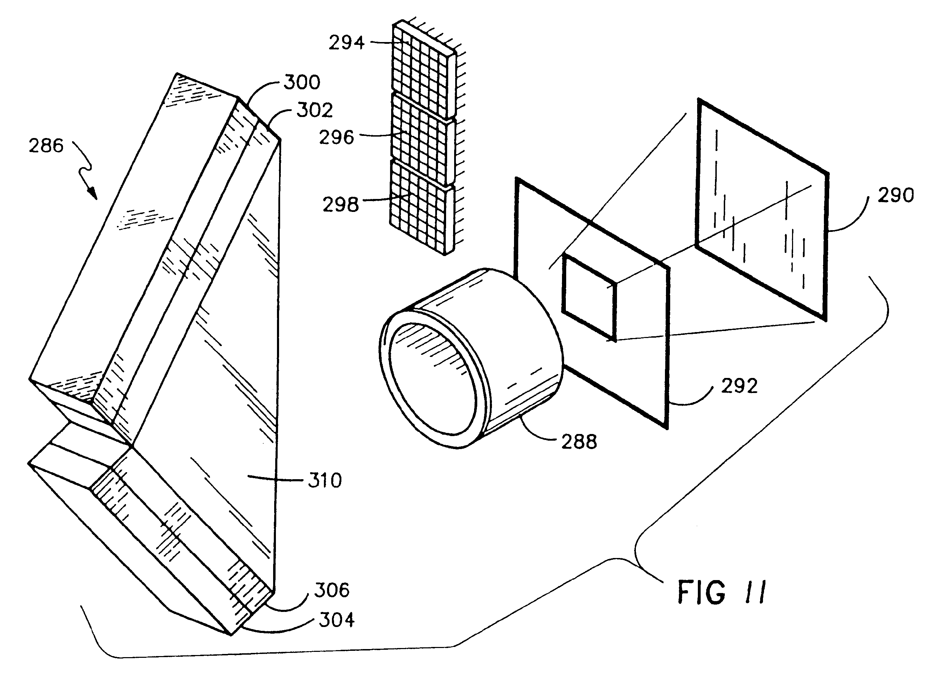

Figure 11 is a schematic isometric view of an implementation of the optical component 286 employed as a two dimensional color optical component system that could be employed, for example, in a color camera. As illustrated in Figure 11, lens 288 focuses an image from an object plane 290 through an aperture device 292 that determines the field of view of the color camera device illustrated in Figure 11. The image from the object plane 290 is focused onto an image plane on which three matrixes of detectors 294, 296, and 298, are disposed to detect the individual color beams that are separated by optical component 286. Optical component 286 is shown constructed as a prism 310 having optical spacer plates 300, 302, 304, and 306 attached thereto. Of course, any of the optical component devices disclosed herein can be used in place of optical component 286, illustrated in Figure 11, depending upon the precision and expense desired. A clear advantage of the implementation illustrated in Figure 11 is that each of the detector matrixes 294, 296, and 298, can be located in the same plane and adjacent to each other so that they can be constructed on a monolithic substrate. This eliminates many alignment problems that are associated with standard prior art dichroic prism devices and provides a uniform output so that each color intensity need not be individually adjusted for each use or during the course of use of the camera. Because each of the matrixes of detectors 294, 296, and 298, are located on the same substrate, nearly uniform temperature gradient provides for nearly identical variations in output intensity of the signals from the detectors.

Figure 12 comprises a schematic side view of a color camera device, such as illustrated in Figure 11, that uses the spaced plate implementation, such as illustrated in Figure 5 and Figure 9, for the optical component 312. As illustrated in Figure 12, an aperture device 314 restricts the field of view of an image that is focused by lens 316 onto the three matrix detector 318, 320, and 322. Optical components 312 split the single optical beam 324 into three separate color beams 326, 328, and 330, having equal optical path lengths, in the manner described previously.

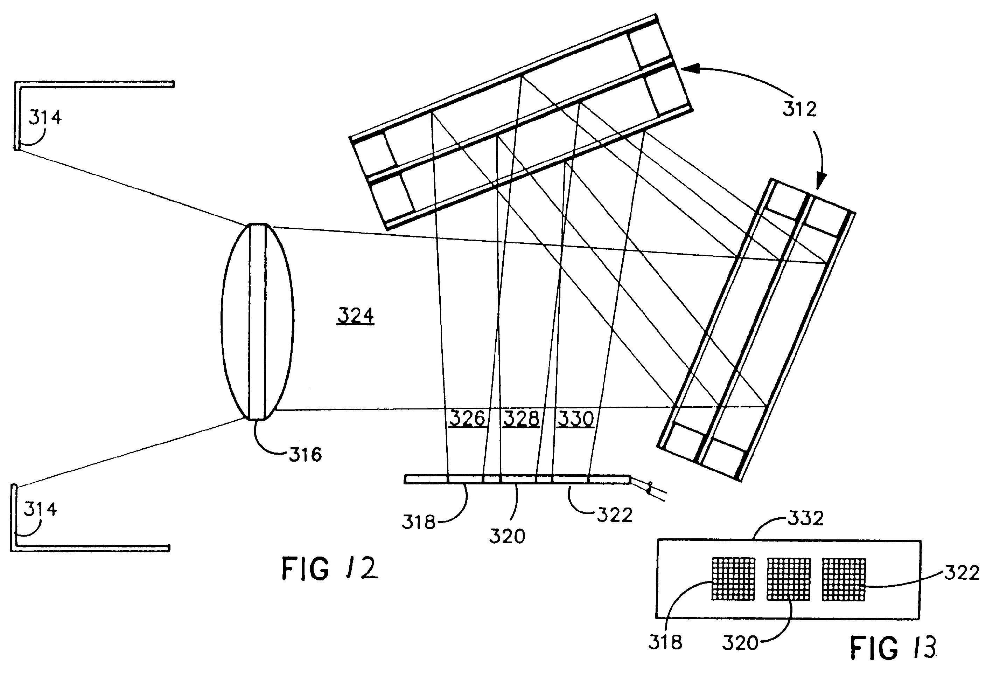

Figure 13 illustrates the three matrix detector 318, 320, and 322 that are mounted on a monolithic substrate 332 to provide a uniform color output signal.

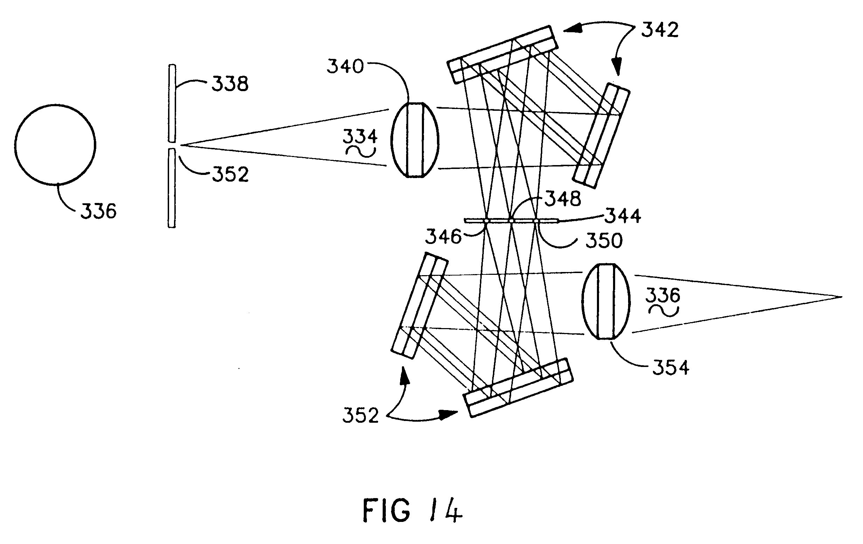

Figure 14 illustrates an electronic colored filter device for filtering an input optical beam 334 produced by an illumination source 336 that is imaged through a pinhole or line aperture 351 in an aperture plate 338 to form a filtered output optical beam 336. Input optical beam 334 is focused by lens 340 through the spectral beam splitter 342 onto an aperture plane 344 on which a number of aperture devices, such as LCD shutters 346, 348, and 350, are disposed to vary the throughput of light in response to an electrical control signal. LCD shutters 346, 348, and 350, can comprise either single pinhole apertures or can comprise a linear array depending upon whether aperture 351 comprises a pinhole aperture or a line aperture. The resultant beams that are projected through the LCD shutters 346, 348, and 350, have an intensity that is adjusted by the electrical control signal that controls the opacity of the LCD shutter devices. These beams are then precisely combined by spectral combiner 352 and focused by lens 354 to produce the single combined output beam 336 that is both spatially and spectrally combined and adjusted in spectral content in accordance with the electronic control signal. Again, any number of color beams can be produced in the device illustrated in Figure 14 together with a corresponding number of shutter devices to provide additional control of the spectral content of output beam 336. Also, any type of shutter device can be used in place of the LCD shutters 346, 348, and 350. Additionally, the individual spectral beams can be produced in any desired manner and it is not necessary that the beamsplitter 342 be employed.

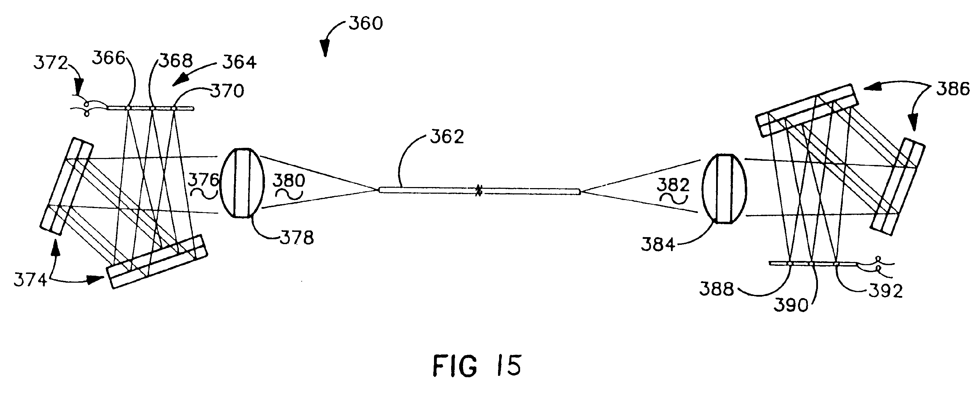

Figure 15 comprises a schematic side view of a multiple channel fiber optic communication device 360 according to the invention. Fiber optic communication devices allow transmission of high bandwidth information across a fiber optic such as fiber optic 362. This allows for high frequency modulation of an optical source such as laser diode. Laser diodes can be switched in the megahertz frequency range. However, the demodulated signal at the receiving end constitutes a single station signal since only one carrier frequency is transmitted through the fiber optic.

The present invention, as disclosed in Figure 15, overcomes these disadvantages and limitations by providing multiple carrier signals in the form of plurality of spatially and spectrally separated beams that have been combined into a single combined beam. As illustrated in Figure 15, an optical generator 364 contains a plurality of individual and spatially separated optical generators 366, 368, and 370, each having a different spectral range. Each of the individual optical generators 366, 368, and 370, is modulated separately by a separate communication signal via electrical connectors schematically illustrated as connectors 372. The optical component 374 of the present invention is aligned to combine the individual beams produced by optical generators 366, 368, and 370, into a single combined beam 376. The single combined beam is then focused by way of lens 378 into a beam 380 onto the end of a fiber optic 362 for transmission to a remote location.

At the remote location, as illustrated in Figure 15, the combined spectral beam is transmitted as shown at 382 from fiber optic 362 and focused by lens 384 through the optical component 386 of the present invention onto a plurality of photo detectors 388, 390, and 392. The optical component 386 spatially and spectrally separates the combined beam 382 into its spectral components that are individually focused on photo detectors 388, 390, and 392. Alignment of the optical component 386 and selection of the dichroic filter layers allows for accurate separation of each of these spectral bands that is produced by optical generators 366, 368, and 370, onto photo detectors 388, 390, 392.

The device of Figure 15 allows for transmission of multiple channels on a single fiber optic 362 by virtue of the ability to spatially combine a plurality of individual beams having different spectral ranges for transmission across fiber optic 362 and subsequently separate the optical beam into its spectral components at the receiving end. In this manner, the present invention provides the ability to transmit multiple carrier bands on a single fiber optic. Of course, as many spectral bands as desired can be transmitted and the present invention is ideally suited for transmitting multiple spectral bands since the dichroic layers can be designed as notch filters to reflect and transmit very narrow spectral bands. Additionally, the optical signal can be generated by any desired optical source including the aperture device 344 illustrated in the electronic filter disclosed in Figure 14. Also, the optical source 364 can comprise a series of line generators or a matrix of generators that can be focused by lens 378 onto an array of fiber optic cables to facilitate transmission over multiple fiber optic cables in a simple and easy manner.

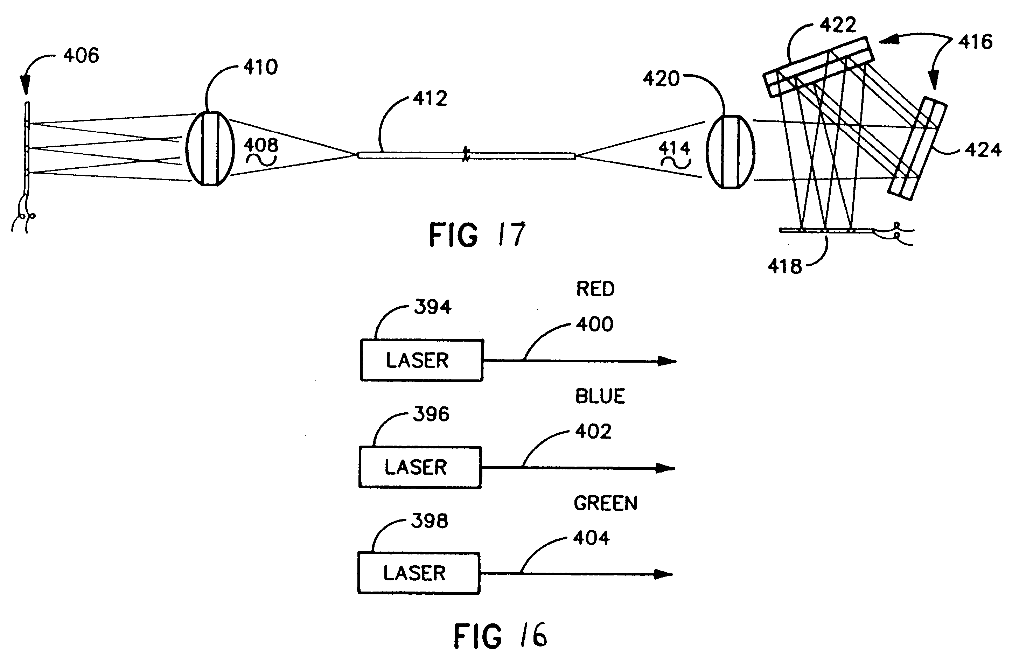

Figure 16 schematically illustrates the use of multiple laser sources 394, 396 and 398, which can comprise solid state lasers or gaseous lasers depending upon the application of the optical source. As illustrated in Figure 16, laser 394 is capable of generating a red beam 400 while laser 396 generates a blue beam 402 and laser 398 generates a green beam 404. Again, as many different optical sources can be used as desired to produce as many beams as required. Laser sources can be used in any of the applications of the present invention illustrated herein. For example, gaseous lasers may be required to produce sufficient power for transmission over extended distances over a fiber optic 362, as illustrated in Figure 15. Additionally, it may be advantageous to use gaseous lasers in the various projection systems, such as the projection system illustrated in Figure 9, to produce sufficient illumination of the projection source. Also, color holographic projection or recording may be implemented using lasers.

Figure 17 shows an alternative implementation of the device illustrated in Figure 15. As illustrated in Figure 33, an optical generator 406 capable of generating a plurality of spectral beams is combined into a single beam 408 by lens 410. Lens 410 combines the individual spectral beams into the single combined beam 408 and focuses the single combined beam 408 on the end of fiber optic 412. The invention is then implemented in substantially the same manner as described in Figure 15 at the receiving end to spatially separate the combined beam 414 by way of optical component 416. Each of the individual spectral beams is focused onto a photo detector 418 by way of lens 420. Because the optical path lengths of each of the individual beams is not critical, due to the fact that each spectral beam comprises an individual carrier band, it is not essential that both composite dichroic devices 422 and 424 be employed to separate the combined beam 414. Hence, only a single composite dichroic device, such as dichroic device 424, is necessary in accordance with the invention illustrated in Figure 17.

The present invention therefore employs both an optical separator device as well as an optical combiner device which can be employed in a number of unique implementations. The composite dichroic layer devices can be employed in a number of different ways with a wide range of variables to produce the desired results and optical quality. The present invention is capable of inexpensively combining or separating individual substantially parallel spectral beams which eliminates many of the problems involved with alignment of components. Additionally, construction techniques of the optical component are greatly simplified over prior art devices, such as dichroic prisms, allowing for an optical component capable of producing comparable or better optical quality at only a fraction of the cost of dichroic prisms.

The foregoing description of the invention has been presented for purposes of illustration and description. It is not intended to be exhaustive or to limit the invention to precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A multiple channel fiber optic communication device (360) comprising:
optical generator means (384) for generating a plurality of optical beams such that each of said optical beams has a predetermined spectral range;
means for individually varying the intensity (372, 366, 368, 370) of each of said plurality of optical beams such that each of said plurality of optical beams is a separate communication channel in said multiple channel fiber optic communication device;
spectral combiner means (374) for spatially and spectrally combining said plurality of optical beams into a single combined beam wherein said spectral combiner means comprises dichroic layer means having a predetermined spatial separation for reflecting said plurality of optical beams to cause said plurality of optical beams to be spatially and spectrally superimposed to form said single combined beam;
fiber optic transmission means (362) for transmitting said single combined beam;
spectral separator means (386) for spatially and spectrally separating said single combined beam that has been transmitted through said fiber optic transmission means (382) to obtain said plurality of optical beams by reflecting said plurality of optical beams from a plurality of spatially separated and substantially parallel dichroic layers;
detector means (388, 390, 392) aligned with each of said plurality of optical beams for sensing variations in intensity of each of said plurality of optical beams.

2. The multiple channel fiber optic communication device of claim 1 wherein said spectral combiner means (374) comprises a lens (410).

3. The multiple channel fiber optic communication device of claim 1 wherein said means for individually varying (372, 366, 368, 370) comprises liquid crystal display shutter means for varying the intensity of each of said plurality of optical beams individually.

4. The multiple channel fiber optic communication device of claim 1 wherein said optical generator means (364) comprises solid state lasers.

5. The multiple channel fiber optic communication device of claim 4 wherein said means for individually varying (372, 366, 368, 370) the intensity of said plurality of optical means comprises control signal means (372) for varying the intensity of said solid state lasers.

## Patentansprüche

1. Ein Mehrkanalfaseroptikkommunikationsgerät (360), mit:
einer optischen Generatoreinrichtung (384) zum Erzeugen einer Mehrzahl von optischen Strahlen derart, daß jeder der optischen Strahlen einen vorbestimmten spektralen Bereich aufweist;
einer Einrichtung zum individuellen Verändern der Intensität (372, 366, 368, 370) jedes der Mehrzahl der optischen Strahlen derart, daß jeder der Mehrzahl der optischen Strahlen ein getrennter Kommunikationskanal in dem Mehrkanalfaseroptikkommunikationsgerät ist;
einer spektralen Kombinatoreinrichtung (374) zum räumlichen und spektralen Kombinieren der Mehrzahl von optischen Strahlen in einen einzelnen kombinierten Strahl, wobei die spektrale Kombinatoreinrichtung eine dichroitische Schichteinrichtung umfaßt, die eine vorbestimmte räumliche Trennung zum Reflektieren der Mehrzahl von optischen Strahlen aufweist, um zu bewirken, daß sich die Mehrzahl von optischen Strahlen räumlich und spektral überlagert, um den einzelnen kombinierten Strahl zu bilden;
einer Faseroptikübertragungseinrichtung (362) zum Senden des einzelnen kombinierten Strahls;
einer spektralen Separatoreinrichtung (386) zum räumlichen und spektralen Trennen des einzelnen kombinierten Strahls, der durch die Faseroptikübertragungseinrichtung (382) übertragen wurde, um die Mehrzahl von optischen Strahlen durch Reflektieren der Mehrzahl von optischen Strahlen an einer Mehrzahl von räumlich getrennten und im wesentlichen parallelen dichroitischen Schichten zu erhalten;
einer Erfassungseinrichtung (388, 390, 392), die mit jeder der Mehrzahl von optischen Strahlen ausgerichtet ist, um Veränderungen der Intensität jedes der Mehrzahl von optischen Strahlen zu erfassen.

2. Das Mehrkanalfaseroptikkommunikationsgerät nach Anspruch 1, bei dem die spektrale Kombinatoreinrichtung (374) eine Linse (410) umfaßt.

3. Das Mehrkanalfaseroptikkommunikationsgerät nach Anspruch 1, bei dem die Einrichtung zum individuellen Verändern (372, 366, 368, 370) eine Flüssigkristallanzeigeblendeneinrichtung umfaßt, um die Intensität jedes der Mehrzahl von optischen Strahlen einzeln zu verändern.

4. Das Mehrkanalfaseroptikkommunikationsgerät nach Anspruch 1, bei dem die optische Generatoreinrichtung (364) Festkörperlaser umfaßt.

5. Das Mehrkanalfaseroptikkommunikationsgerät nach Anspruch 4, bei dem die Einrichtung zum individuellen Verändern (372, 366, 368, 370) der Intensität der Mehrzahl von optischen Strahlen eine Steuerungssignaleinrichtung (372) umfaßt, um die Intensität der Festkörperlaser zu verändern.

## Revendications

1. Un dispositif de communication (360) à fibre optique à canaux multiples comprenant:
un moyen générateur optique (384) pour engendrer une série de faisceaux optiques tels que chacun desdits faisceaux optiques présente une plage spectrale prédéterminée;
un moyen de modification individuelle de l'intensité (372, 366, 368, 370) de chacun des faisceaux optiques de ladite série d'une manière telle que chaque faisceau optique de ladite série est un canal de communication séparée dans ledit dispositif de communication à fibre optique à canaux multiples;
un moyen combinateur spectral (374) pour combiner spatialement et spectralement en un faisceau combiné unique ladite série de faisceaux optiques, ledit moyen combinateur spectral comprenant un moyen de couches dichroïques à séparation spatiale prédéterminée pour réfléchir ladite série de faisceaux optiques de manière à amener les faisceaux optiques de ladite série à être superposés spatialement et spectralement afin de former ledit faisceau combiné unique;
un moyen de transmission (362) à fibre optique pour transmettre ledit faisceau combiné unique;
un moyen séparateur spectral (386) pour séparer spatialement et spectralement ledit faisceau combiné unique qui a été transmis à travers ledit moyen de transmission (382) à fibre optique de manière à obtenir ladite série de faisceaux optiques en réfléchissant ladite série de faisceaux optiques à partir d'une série de couches dichroïques spatialement séparées et sensiblement parallèles;
des moyens détecteurs (388, 390, 392) alignés avec chacun desdits faisceaux optiques de la série pour capter des variations d'intensité de chacun des faisceaux optiques de ladite série.

2. Le dispositif de communication à fibre optique à canaux multiples selon la revendication 1 dans lequel le moyen combinateur spectral (374) comprend une lentille (410).

3. Le dispositif de communication à fibre optique à canaux multiples selon la revendication 1 dans lequel ledit moyen de modification individuelle (372, 366, 368, 370) comprend un moyen obturateur du type affichage à cristaux liquides pour modifier individuellement l'intensité de chacun desdits faisceaux optiques de ladite série.

4. Le dispositif de communication à fibre optique à canaux multiples selon la revendication 1 dans lequel ledit moyen générateur optique (364) comprend des laser d'état solide.

5. Le dispositif de communication à fibre optique à canaux multiples selon la revendication 4 dans lequel ledit moyen de modification individuelle (372, 366, 368, 370) de l'intensité de ladite série de moyens optiques comprend un moyen (372) de signaux de commande pour modifier l'intensité desdits laser d'état solide.
